# EUROPEAN PATENT APPLICATION

(11) **EP 4 492 646 A1**
(43) Date of publication of application: **15.01.2025**
(21) Application number: 24182495.2
(22) Date of filing: 17.06.2024
(51) Int. Cl.: H02K 5/10

(54) **MOTOR**

(30) Priority: 03.07.2023 JP 2023109423
(71) Applicant: Panasonic Intellectual Property Management Co., Ltd., Kadoma-shi, Osaka 571-0057 (JP)
(72) Inventor: HIGUCHI, Masafumi, Kadoma-shi, Osaka, 571-0057 (JP); SATOU, Junichi, Kadoma-shi, Osaka, 571-0057 (JP); YOSHIDA, Hisashi, Kadoma-shi, Osaka, 571-0057 (JP); ASANO, Takeshi, Kadoma-shi, Osaka, 571-0057 (JP)
(74) Representative: Eisenführ Speiser

(57) **Abstract**

A motor drives a fan in an air conditioner, the motor including: a stator around which a coil is wound; a rotor that has a shaft and is provided rotatably about the stator; a board that includes an electronic component that drives and controls the stator and the rotor; a body case including a first housing region that houses the stator and houses the rotor with the shaft that is partly exposed to the outside, and a second housing region that houses the board; and a first partition wall that divides the first housing region from the second housing region.

## Description

### BACKGROUND

### 1. Technical Field

The present disclosure relates to a motor that drives a fan in an air conditioner.

### 2. Description of the Related Art

Sealed structure in a motor (PTLs 1 and 2) and a waterproof motor (PTL 3) provided in an engine room of an automobile has been conventionally known.

### Citation List

### Patent Literature

PTL 1: Unexamined Japanese Patent Publication No. 2006-187076
PTL 2: Unexamined Japanese Patent Publication No. 2003-348785
PTL 3: Unexamined Japanese Patent Publication No. 2019-140897

### SUMMARY

A conventional motor with sealing structure is very expensive as a fan-driving motor of an air conditioner, and thus has not been used for the fan-driving motor. Additionally, the sealing structure in the conventional motor is for preventing intrusion of dust, moisture, and the like, and thus is less likely to prevent intrusion of gas into an interior of the motor. For example, a motor is used to drive a fan of a heat exchanger in an air conditioner using a flammable refrigerant. The motor is provided inside with a control circuit that is preferably not exposed to the flammable refrigerant. The motor includes a lead wire connected to the control circuit and drawn to the outside, so that there are many gaps leading to the outside. Additionally, a ball bearing for rotatably fixing a rotor to a stator also has a gap leading to the outside. Thus, intrusion of a refrigerant is likely to be allowed.

It is an object of the present disclosure to inexpensively provide a motor capable of suppressing or preventing intrusion of a flammable refrigerant used in an air conditioner into a control circuit unit.

A motor according to an aspect of the present disclosure drives a fan in an air conditioner, the motor including: a stator around which a coil is wound; a rotor that has a shaft and is provided rotatably about the stator; a board that includes an electronic component that drives and controls the stator and the rotor; a body case including a first housing region that houses the stator and houses the rotor with the shaft that is partly exposed to an outside, and a second housing region that houses the board; and a first partition wall that divides the first housing region from the second housing region.

The motor according to the aspect of the present disclosure is configured such that the stator and the rotor are housed in the first housing region, and the board that includes the electronic component is housed in the second housing region. Then, the first partition wall divides the first housing region from the second housing region. As a result, the second housing region of the body case is isolated from the first housing region by the first partition wall. For example, the flammable refrigerant can enter the first housing region through a part where the lead wire connected to the control circuit is drawn out from the body case to the outside, a gap between the body case and the ball bearing that rotatably fixes the shaft of the rotor, and the like. Even when the flammable refrigerant enters the first housing region, the flammable refrigerant is less likely to enter the second housing region from the first housing region. Thus, exposure of the board housed in the second housing region to the refrigerant can be suppressed or prevented. Using the above configuration does not require special sealing structure for the part where the lead wire connected to the control circuit is drawn out from the body case to the outside, the gap between the body case and the ball bearing that rotatably fixes the shaft of the rotor, and the like. Additionally, many components common to a motor for driving a fan in a conventional air conditioner can be used. Thus, a motor improved in safety can be obtained at low cost.

The motor may further include a second partition wall that divides the second housing region from the outside and is connected to the first partition wall.

The above configuration enables the second partition wall that divides the second housing region from the outside to be provided independently of walls constituting the body case. In this case, the second partition wall can be connected to the first partition wall later, so that the board can be easily disposed in the second housing region.

The second partition wall may be connected to the first partition wall by press-fitting.

The above configuration does not require a fixture such as a screw.

The second housing region may be filled with a drip-proof material.

The above configuration enables the refrigerant to be absorbed by the drip-proof material even when the refrigerant enters the second housing region.

The motor may further include a wire electrically connecting the electronic component and the rotor or the stator, and the first partition wall may include a hole through which the wire is inserted.

The above configuration enables the electronic component of the board disposed in the second housing region and the rotor or the stator disposed in the first housing region to be connected by the wire through the hole.

The motor may further include a seal part that seals a gap between the wire and the hole.

The above configuration enables the seal part to suppress or prevent intrusion of the refrigerant in the first housing region into the second housing region even when the refrigerant enters the first housing region.

The present disclosure enables providing inexpensively a motor capable of suppressing or preventing intrusion of a flammable refrigerant used in an air conditioner into a control circuit unit.

### BRIEF DESCRIPTION OF THE DRAWINGS

Fig. 1 is a diagram illustrating a general configuration of an air conditioner according to an exemplary embodiment;
Fig. 2 is a front view of a motor; and
Fig. 3 is a sectional view of the motor of Fig. 2 taken along line III-III.

### DETAILED DESCRIPTIONS

Hereinafter, a motor according to an exemplary embodiment of the present disclosure will be described with reference to the drawings. The motor described below is merely an exemplary embodiment of the present disclosure. Thus, the present disclosure is not limited to the following exemplary embodiment, and additions, deletions, and changes can be made without departing from the spirit of the present disclosure.

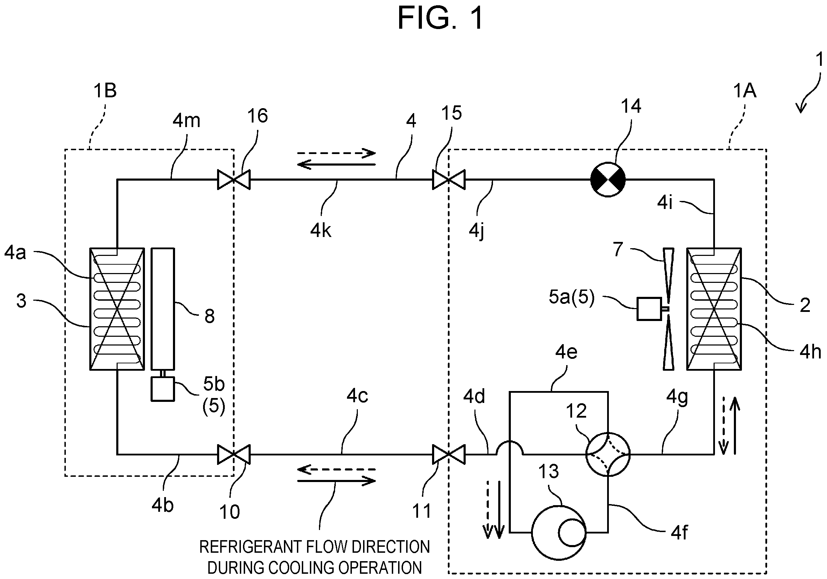

Fig. 1 is a diagram illustrating a general configuration of air conditioner 1 according to an exemplary embodiment. As illustrated in Fig. 1, air conditioner 1 includes outdoor heat exchanger 2 that exhausts heat to the outside during cooling operation, indoor heat exchanger 3 that absorbs heat from external air, and circulation path 4 including these heat exchangers 2, 3. Outdoor heat exchanger 2 and indoor heat exchanger 3 are respectively provided with fans 7, 8 driven by corresponding motors 5a, 5b in their vicinity. Motor 5 described below includes motors 5a, 5b. Fan 7 is rotationally driven to generate an airflow that flows through outdoor heat exchanger 2, and fan 8 is rotationally driven to generate an airflow that flows through indoor heat exchanger 3.

Although terms "upstream" and "downstream" are used for convenience in the description below, these terms mean "upstream" and "downstream" of a flow with reference to a refrigerant flowing through circulation path 4 during cooling operation of air conditioner 1. Fig. 1 illustrates solid arrows provided along circulation path 4, the solid arrows indicating a direction in which the refrigerant flows from "upstream" to "downstream" during the cooling operation. The refrigerant during heating operation flows in a direction opposite to that of the refrigerant during the cooling operation as indicated by arrows with a broken line.

Indoor heat exchanger 3 in Fig. 1 includes refrigerant pipe 4a constituting a part of circulation path 4. Refrigerant pipe 4a is provided at its downstream end with refrigerant pipe 4b that extends and is connected to indoor unit liquid-side connector 10 (a downstream connector during cooling operation). Indoor unit liquid-side connector 10 is provided with another refrigerant pipe 4c extending. Refrigerant pipe 4c is connected at its downstream end to an upstream end of refrigerant pipe 4d using two-way valve 11. Refrigerant pipe 4d is connected at its downstream end to a first port of four-way valve 12. Four-way valve 12 includes a second port communicating with the first port during cooling operation and being provided with refrigerant pipe 4e extending. Refrigerant pipe 4e is connected at its downstream end to compressor 13.

Compressor 13 compresses a refrigerant at low temperature and under low pressure, flowing from indoor heat exchanger 3 to outdoor heat exchanger 2, to increase the temperature and pressure thereof during cooling operation, and compresses a refrigerant at low temperature and under low pressure, flowing from outdoor heat exchanger 2 to indoor heat exchanger 3, to increase the temperature and pressure thereof during heating operation. Although not illustrated, an accumulator is normally connected in front (upstream side) of compressor 13 to separate the refrigerant into gas and liquid to prevent the liquid refrigerant from returning to compressor 13.

Compressor 13 is provided with another refrigerant pipe 4f extending. Refrigerant pipe 4f is connected at its downstream end to a third port of four-way valve 12. Four-way valve 12 includes a remaining fourth port communicating with the third port during cooling operation and being provided with refrigerant pipe 4g extending. Refrigerant pipe 4g is connected at its downstream end to an upstream end of refrigerant pipe 4h provided in outdoor heat exchanger 2. Refrigerant pipe 4h in outdoor heat exchanger 2 is connected at its downstream end to another refrigerant pipe 4i extending. Refrigerant pipe 4i is connected at its downstream end to expansion valve 14. Expansion valve 14 reduces pressure of a refrigerant flowing from outdoor heat exchanger 2 to indoor heat exchanger 3 during cooling operation, and reduces pressure of the refrigerant flowing from indoor heat exchanger 3 to outdoor heat exchanger 2 during heating operation.

Expansion valve 14 is provided with another refrigerant pipe 4j extending. Refrigerant pipe 4j is connected at its downstream end to one port of two-way valve 15. Two-way valve 15 includes the other port from which refrigerant pipe 4k extends. Refrigerant pipe 4k is connected at its downstream end to indoor unit connector 16 (an upstream connector during cooling operation). Indoor unit connector 16 is provided with another refrigerant pipe 4m extending. Refrigerant pipe 4m is connected at its downstream end to an upstream end of refrigerant pipe 4a in indoor heat exchanger 3 described above.

As described above, refrigerant pipes 4a to 4k, 4m constitute circulation path 4. Circulation path 4 connects indoor heat exchanger 3, four-way valve 12, compressor 13, outdoor heat exchanger 2, expansion valve 14, and the like to each other. The configuration described above includes components from two-way valve 11 to two-way valve 15 along a flow of the refrigerant (or four-way valve 12, compressor 13, outdoor heat exchanger 2, and expansion valve 14), the components constituting outdoor unit 1A of air conditioner 1. Then, components from indoor unit liquid-side connector 16 to the indoor unit liquid-side connector 10 along the flow of the refrigerant (or indoor heat exchanger 3) constitute indoor unit 1B of air conditioner 1. Publicly known components are available for corresponding components described above. Operation of air conditioner 1 during cooling operation and heating operation is publicly known, and thus will not be described.

Examples of a refrigerant (working refrigerant) in air conditioner 1 include a flammable refrigerant heavier than air, such as isobutane or propane. The refrigerant may be a single refrigerant or a mixed refrigerant of a flammable refrigerant and a refrigerant of another type.

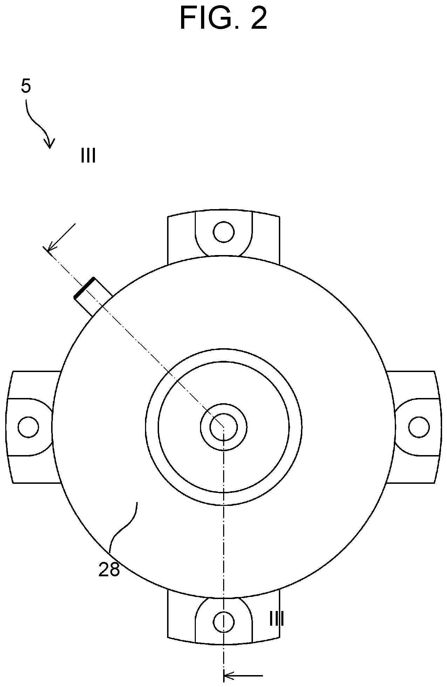

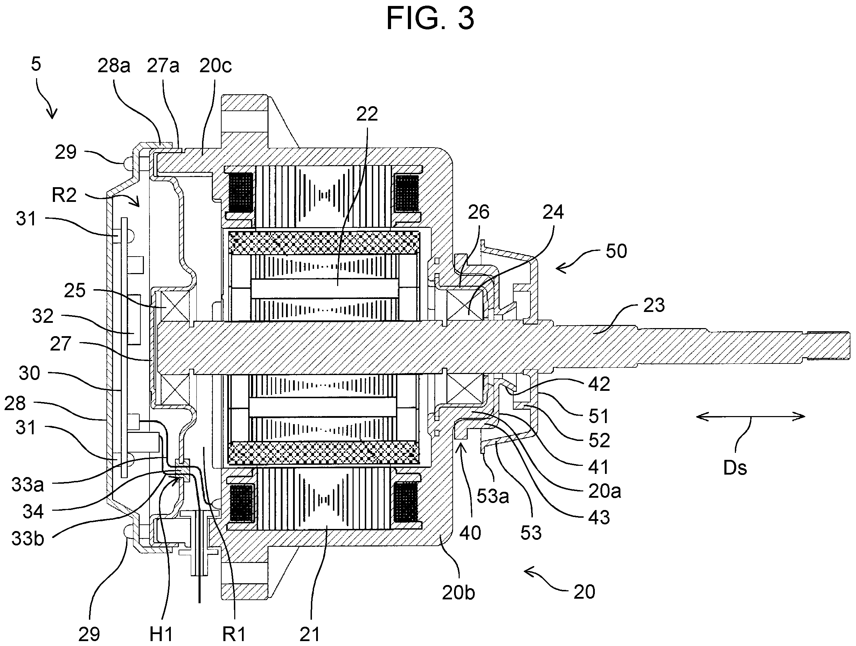

Subsequently, a configuration of motor 5 in air conditioner 1 will be described in detail. Fig. 2 is a front view of motor 5. Fig. 3 is a sectional view of motor 5 of Fig. 2 taken along line III-III.

In the present exemplary embodiment, a brushless motor can be used as motor 5, for example. As illustrated in Fig. 3, motor 5 includes body case 20, stator 21 with a plurality of (e.g., twelve) pole teeth, rotor 22 with shaft 23, first bracket 27, second bracket 28, board 30 that includes electronic component 32, first seal part 40, and second seal part 50. Shaft 23 is provided at its distal end with fan 7 (or fan 8) attached. First bracket 27 corresponds to a first partition wall, and second bracket 28 corresponds to a second partition wall.

Stator 21 is formed by winding a coil around each pole tooth of a stator core. Rotor 22 includes a plurality of (e.g., eight) permanent magnets fixed facing the pole teeth of stator 21, and is rotatably provided about stator 21 using ball bearings 24, 25 described later. Motor 5 detects a magnetic pole position of rotor 22 using voltage applied to winding of stator 21 and current flowing through the winding. Based on the detection result, the coil with the current flowing is switched to rotate shaft 23 about its axis. As a result, fan 7, 8 rotates.

Body case 20 is provided inside with stator 21 integrally molded with resin, and internally houses rotor 22 with shaft 23 that is partly exposed to the outside. Body case 20 as described above mainly includes three components. Body case 20 includes small-diameter part 20a in a tubular shape, large-diameter part 20b in a tubular shape, and case end part 20c in a tubular shape. Large-diameter part 20b is provided closer to a proximal end of shaft 23 than small-diameter part 20a, and has a larger diameter in a direction orthogonal to extension direction Ds of shaft 23 than small-diameter part 20a. Case end part 20c is provided closer to the proximal end of shaft 23 than large-diameter part 20b, and has a larger inner diameter than large-diameter part 20b while having an outer diameter substantially equal to that of large-diameter part 20b.

First bracket 27 is connected to case end part 20c while covering an opening of case end part 20c. As a result, first housing region R1 surrounded by large-diameter part 20b of body case 20 and first bracket 27 is formed. Stator 21 and rotor 22 are housed in first housing region R1. First bracket 27 may be press-fitted into case end part 20c. In this case, bracket 27 includes an outer edge part provided with a double wall, and case end part 20c is press-fitted between one wall and the other wall.

Small-diameter part 20a is provided inside with a bearing part for housing ball bearing 24, for example. First bracket 27 is provided with a recess that is provided with a bearing part for housing ball bearing 25, for example. Shaft 23 is provided rotatably about its axis using ball bearing 24 and ball bearing 25 of body case 20.

First seal part 40 is made of chloroprene rubber, for example. First seal part 40 is rotationally symmetrical to the axis of shaft 23 and is formed in an annular shape. First seal part 40 is provided on small-diameter part 20a of body case 20 in a state where shaft 23 is inserted through first seal part 40. First seal part 40 does not rotate together with shaft 23.

First seal part 40 includes first seal body 41, first wall 42, and fourth wall 43. First seal body 41 is formed in an annular shape (more specifically, in a disk shape with a through-hole) and is disposed orthogonal to extension direction Ds of shaft 23. Shaft 23 is inserted through the hole of first seal body 41. First wall 42 is formed in an annular shape, and not only intersects with first seal body 41 but also protrudes toward second seal part 50. First wall 42 includes a proximal end connected to first seal body 41 and a distal end away from first seal body 41. The distal end may have a larger diameter than the proximal end. First wall 42 is connected to an inner edge of first seal body 41. Fourth wall 43 is formed in a cylindrical shape having an inner diameter substantially equal to an outer diameter of small-diameter part 20a, and not only intersects with first seal body 41 but also protrudes toward large-diameter part 20b of body case 20 on an outer edge of first seal body 41.

Next, second seal part 50 will be described. Second seal part 50 may be made of a material identical to that of first seal part 40, and the material is chloroprene rubber, for example. Second seal part 50 is rotationally symmetrical to the axis of shaft 23 and is formed in an annular shape. Second seal part 50 is provided on shaft 23 to be further away from body case 20 in extension direction Ds of shaft 23 than first seal part 40. As a result, second seal part 50 rotates together with shaft 23.

Second seal part 50 includes second seal body 51, second wall 52, and third wall 53. Second seal body 51 is formed in an annular shape (more specifically, in a disk shape with a through-hole) and is disposed orthogonal to extension direction Ds of shaft 23. Second seal body 51 has a larger maximum dimension than first seal body 41. Specifically, second seal body 51 has a larger maximum diameter than first seal body 41. Thus, second seal body 51 is located with an outer edge that is radially further away from shaft 23 than the outer edge of first seal body 41. Second seal part 50 is attached while shaft 23 is inserted through the hole of second seal body 51. Second wall 52 is formed in an annular shape, and not only is orthogonal to second seal body 51 but also protrudes toward first seal part 40. Second wall 52 is disposed further away from shaft 23 than first wall 42 in the direction orthogonal to extension direction Ds. Second wall 52 includes a distal end disposed closer to body case 20 than a distal end of first wall 42 in extension direction Ds of shaft 23.

Third wall 53 is formed in an annular shape, and not only intersects with second seal body 51 but also protrudes toward first seal part 40 in an outer edge of second seal body 51. Third wall 53 is disposed further away from shaft 23 than second wall 52 in the direction orthogonal to extension direction Ds. Third wall 53 includes end 53a close to body case 20. End 53a of third wall 53 is located not only closer to body case 20 than first seal body 41 but also further away from shaft 23 radially outward than fourth wall 43. First wall 42, second wall 52, and third wall 53 in the above configuration are disposed facing each other. The phrase, "facing each other", includes not only a state where first wall 42, second wall 52, and third wall 53 face each other and are parallel to each other, but also a state where they face each other and are non-parallel to each other, and a state where they face each other and are parallel or non-parallel to each other.

Small-diameter part 20a of body case 20 includes an inner wall to which third bracket 26 made of metal for housing ball bearing 24 is fixed. Third bracket 26 includes a hole through which shaft 23 is inserted.

Second bracket 28 is connected to first bracket 27 while covering first bracket 27 from the outside. Second bracket 28 is formed in a substantially bottomed tubular shape to hold electronic component 32 and board 30 on which various mounting components are provided. Second bracket 28 is connected to first bracket 27 by press fitting, for example. In this case, second bracket 28 with outer peripheral edge 28a protruding toward first bracket 27 is press-fitted into first bracket 27, outer peripheral edge 28a coming into contact with outer peripheral edge 27a of first bracket 27. As a result, second housing region R2 surrounded by first bracket 27 and second bracket 28 is formed. Second bracket 28 divides second housing region R2 from the outside as described above. In the present exemplary embodiment, second bracket 28 may be connected to first bracket 27 by fixture 29 such as a screw together with the press fitting described above. In this case, fixture 29 is disposed along extension direction Ds of shaft 23 to fasten first bracket 27 and second bracket 28 together to case end part 20c.

Board 30 is housed in second housing region R2. Thus, board 30 is disposed in second housing region R2 isolated from first housing region R1 in which stator 21 and rotor 22 are disposed. Board 30 is provided thereon with electronic component 32 and various mounting components that drive and control stator 21 and rotor 22. Electronic component 32 is a power transistor, for example. Board 30 is fixed to an inner wall of second bracket 28 by fixture 31 such as a screw.

Board 30 is equipped with a control circuit that is electrically connected to stator 21 or a control circuit of an air conditioner outside body case 20 by wires 33a, 33b. First bracket 27 is provided with hole H1 through which wires 33a, 33b are inserted. Wires 33a, 33b are inserted through hole H1. Hole H1 is provided with seal part 34. Seal part 34 seals a gap between wires 33a, 33b and hole H1.

As described above, motor 5 of the present exemplary embodiment is configured such that stator 21 and rotor 22 are housed in first housing region R1, and board 30 that includes electronic component 32 is housed in second housing region R2 in body case 20. Then, first bracket 27 divides first housing region R1 from second housing region R2. As a result, second housing region R2 of body case 20 is isolated from first housing region R1 by first bracket 27. For example, the flammable refrigerant can enter the first housing region through a part where wire 33a, 33b connected to board 30 is drawn out from body case 20 to the outside, a gap between body case 20 and ball bearing 24, 25 that rotatably fixes shaft 23 of rotor 22, and the like. Even when the flammable refrigerant enters the first housing region R1, the flammable refrigerant is less likely to enter second housing region R2 from first housing region R1. Thus, exposure of board 30 housed in second housing region R2 to the refrigerant can be suppressed or prevented. Using the above configuration does not require special sealing structure for the part where wire 33a, 33b connected to board 30 is drawn out from body case 20 to the outside, and body case 20 and ball bearing 24, 25 that rotatably fixes shaft 23 of rotor 22.

The present disclosure is not limited to the exemplary embodiment described above, and various modifications can be made without departing from the gist of the present disclosure. Examples of the various modifications are as follows.

The above exemplary embodiment uses double seal structure of first seal part 40 and second seal part 50 as a configuration for causing the refrigerant to be less likely to enter first housing region R1. However, the configuration in which board 30 is disposed in second housing region R2 as in the above exemplary embodiment does not necessarily require first seal part 40 and second seal part 50 to be provided. However, providing first seal part 40 and second seal part 50 enables further improvement in reliability of preventing the refrigerant from entering body case 20.

Although first bracket 27 is provided in the above exemplary embodiment, the present invention is not limited thereto. Using case end part 20c with an opening closed does not require first bracket 27.

Although board 30 is fixed to the inner wall of second bracket 28 by fixture 31 in the above exemplary embodiment, the present invention is not limited thereto, and board 30 may be fixed to first bracket 27.

Additionally, seal part 34 is provided in hole H1 of first bracket 27 in the above exemplary embodiment. Seal part 34 seals a gap between wires 33a, 33b and hole H1. Alternatively, when second housing region R2 is filled with a drip-proof material, seal part 34 can be unnecessary. Examples of the drip-proof material include a resin such as a moisture-proof urethane resin or a silicone coating agent.

## Claims

1. A motor that drives a fan in an air conditioner, the motor comprising:
a stator around which a coil is wound;
a rotor that includes a shaft and is provided rotatably about the stator;
a board that includes an electronic component that drives and controls the stator and the rotor;
a body case including a first housing region that houses the stator and houses the rotor with the shaft that is partly exposed to an outside, and a second housing region that houses the board; and
a first partition wall that divides the first housing region from the second housing region.

2. The motor according to Claim 1, further comprising a second partition wall that divides the second housing region from the outside and is connected to the first partition wall.

3. The motor according to Claim 2, wherein the second partition wall is connected to the first partition wall by press-fitting.

4. The motor according to Claim 1, wherein the second housing region is filled with a drip-proof material.

5. The motor according to Claim 1, further comprising
a wire electrically connecting the electronic component and the rotor or the stator,
wherein the first partition wall includes a hole through which the wire is inserted.

6. The motor according to Claim 5, further comprising a seal part that seals a gap between the wire and the hole.
